# EUROPÄISCHE PATENTSCHRIFT

(11) **EP 2 810 332 B1**
(45) Veröffentlichungstag und Bekanntmachung des Hinweises auf die Patenterteilung: **28.11.2018**
(21) Anmeldenummer: 13713775.8
(22) Anmeldetag: 19.03.2013
(51) Int. Cl.: H01M 12/08, H01M 8/04082, H01M 8/2475, H01M 8/04007, H01M 8/18

(54) **ELEKTRISCHER ENERGIESPEICHER**
ELECTRICAL ENERGY STORE
ACCUMULATEUR D'ÉNERGIE ÉLECTRIQUE

(30) Priorität: 29.03.2012 DE 102012205077
(43) Veröffentlichungstag der Anmeldung: 10.12.2014
(73) Patentinhaber: Siemens Aktiengesellschaft, 80333 München (DE)
(72) Erfinder: DRENCKHAHN, Wolfgang, 91058 Erlangen (DE); GREINER, Horst, 91301 Forchheim (DE); KELLNER, Norbert, 91077 Kleinsendelbach (DE); LANDES, Harald, 90607 Rückersdorf (DE)
(86) Internationale Anmeldenummer: PCT/EP2013/055680
(87) Internationale Veröffentlichungsnummer: WO 2013/143921

(56) Entgegenhaltungen:
- WO-A1-2012/098945
- DE-A1-102009 057 720
- DE-A1-102010 027 690
- DE-A1-102011 078 116
- NANSHENG XU ET AL: "A novel solid oxide redox flow battery for grid energy storage", ENERGY & ENVIRONMENTAL SCIENCE, Bd. 4, Nr. 12, 1. Januar 2011 (2011-01-01) , Seite 4942, XP055064967, ISSN: 1754-5692, DOI: 10.1039/c1ee02489b
- XUAN ZHAO ET AL: "Energy storage characteristics of a new rechargeable solid oxide iron-air battery", RSC ADVANCES, Bd. 2, Nr. 27, 1. Januar 2012 (2012-01-01) , Seite 10163, XP055064969, ISSN: 2046-2069, DOI: 10.1039/c2ra21992a
- XUAN ZHAO ET AL: "Performance of Solid Oxide Iron-Air Battery Operated at 550°C", JOURNAL OF THE ELECTROCHEMICAL SOCIETY, Bd. 160, Nr. 8, 25. März 2013 (2013-03-25) , Seiten A1241-A1247, XP055065462, DOI: 10.1149/2.085308jes]
- HIROKO OHMORI ET AL: "Numerical simulation of gas diffusion effects on charge/discharge characteristics of a solid oxide redox flow battery", JOURNAL OF POWER SOURCES, Bd. 208, 1. Juni 2012 (2012-06-01), Seiten 383-390, XP055064972, ISSN: 0378-7753, DOI: 10.1016/j.jpowsour.2012.02.054

## Beschreibung

Die Erfindung betrifft einen elektrischen Energiespeicher nach Anspruch 1.

Zur Speicherung von überschüssigem elektrischem Strom, der beispielsweise bei der Stromerzeugung durch erneuerbare Energiequellen oder durch Kraftwerke anfällt, die im Bereich des optimalen Wirkungsgrades betrieben werden und für den temporär kein Bedarf im Netz besteht, werden verschiedene technische Alternativen angewandt. Eine davon ist die wieder aufladbare Metall-Luftbatterie (Rechargeable Oxide Battery, ROB). ROBs werden üblicherweise bei Temperaturen zwischen 600°C und 800°C betrieben. Hierbei wird Sauerstoff, der an einer (positiven) Luftelektrode der elektrischen Zelle zugeführt wird in Sauerstoffionen umgewandelt, durch einen Festkörperelektrolyten transportiert und zur gegenüberliegenden negativen Elektrode gebracht. Dort findet eine Reaktion mit einem gasförmigen Redoxpaar statt, die je nach Lade- oder Entladeprozess Elektronen aufnimmt oder abgibt, wobei der von dem gasförmigen Redoxpaar aufgenommene oder abgegebene Sauerstoff durch Diffusion der Komponenten des Redoxpaares auf ein poröses, also gasdurchlässiges und ebenfalls oxidierbares und reduzierbares Speichermedium übertragen wird. Aufgrund der hohen benötigten Temperaturen für diesen Prozess ist die Werkstoffauswahl für die verwendeten Zellenwerkstoffe und die Konstruktion der Zellenteile sowie die Anordnung des Speichermediums sehr komplex. Insbesondere leiden die einzelnen Komponenten nach mehreren Redoxzyklen, die bei den besagten Betriebstemperaturen betrieben werden. In der DE 10 2011 078 116 A1 wird eine Rechargeable Oxide Battery mit der beschriebenen Wirkungsweise offenbart.

Aufgabe der Erfindung ist es daher, einen elektrischen Energiespeicher auf Basis einer ROB bereitzustellen, der gegenüber dem Stand der Technik einen kostengünstigen, montagetechnisch einfachen und temperaturbeständigen Aufbau eines Energiespeichers mit mehr als einem Stack gewährleistet.

Die Lösung der Aufgabe besteht in einem elektrischen Energiespeicher nach dem Oberbegriff des Patentanspruchs 1. Der erfindungsgemäße elektrische Energiespeicher nach Patentanspruch 1 weist mehr als einen Stack mit jeweils mindestens einer Speicherzelle auf, die wiederum eine Luftelektrode, die mit einer Luftzufuhrvorrichtung in Verbindung steht , eine negative Elektrode und ein in ihrer unmittelbaren Nähe angeordnetes Speichermedium umfasst. Daher wird die negative Elektrode im Weiteren als speicherseitige oder kurz als Speicherelektrode. Die Speicherelektrode selbst umfasst nicht das Speichermedium. An die Speicherelektrode grenzen Kanäle an, die das poröse Speichermedium sowie ein Wasserstoff-Wasserdampf-Gemisch enthalten. Dessen Zusammensetzung ist im unbelasteten Zustand durch die Einstellung des chemischen Gleichgewichts mit dem Speichermaterial gegeben und wird davon beim Laden und Entladen je nach Belastung mehr oder weniger abweichen. Die Erfindung zeichnet sich dadurch aus, dass ein Reservoir mit einem Wasserdampf-Wasserstoff-Gemisch vorgesehen ist, das mit den Kanälen in direkter Verbindung steht. Etwaige Gasverluste durch Leckagen werden dabei dadurch ausgeglichen, dass das Reservoir mit einer Dampfleitung in Verbindung steht, die den Druck im Reservoir aufrecht erhält. Man könnte genauso gut an dieser Stelle Wasserstoff oder ein Gemisch aus Wasserdampf und Wasserstoff zuspeisen, da sich immer von selbst das zum Ladezustand des Speichers passende Gemisch einstellt.

Der beschriebene Aufbau des elektrischen Energiespeichers ist eine technisch einfache Lösung, da verschiedene Ebenen des elektrischen Energiespeichers übereinander gesetzt werden können, so dass ein sogenannter Stack aus mehreren Speicherzellen entsteht. Dieser kann in einfacher Weise in einem Wasserdampf-Wasserstoff-Reservoir platziert werden, so dass auf eine aufwändige Zuführung dieses Gases zu den einzelnen Zellen verzichtet werden kann. In einer weiteren vorteilhaften Ausgestaltung der Erfindung weist ein Stack eine Wand auf, wobei die Kanäle mit dem Speichermedium zu dieser Wand hin offen zugänglich sind. Dadurch kann das Wasserdampf-Wasserstoff-Gemisch durch die Öffnungen in der Stack-Wand in die Kanäle z.B. durch Diffusion hineingelangen, wenn der Stack direkt im Gasreservoir platziert ist.

Der elektrische Energiespeicher weist mehrere Stacks auf, die wiederum von einem gemeinsamen Wasserdampf-Wasserstoff-Reservoir umgeben sind.

Dabei ist das Wasserdampf-Wasserstoff-Reservoir mit mehreren Stacks belegt, nach außen thermisch isoliert. Es bildet somit eine sogenannte Hotbox.
In dem Wasserdampf-Wasserstoff-Reservoir kann auch in vorteilhafter Weise ein Überdruck, bevorzugt im Hektopascalbereich (1 hPa-100 hPa) vorliegen. Dies gewährleistet, dass stets genügend Wasserdampf-Wasserstoff-Gemisch zur Reaktion zur Verfügung steht, und von außerhalb des Reservoirs bzw. der Hotbox die Einströmung oder Eindiffusion von Luft durch Leckagen behindert wird, was die Reaktion mit dem Speichermaterial durch den Eintrag von inertem Stickstoff negativ beeinflussen könnte.
Weitere Merkmale und weitere vorteilhafte Ausgestaltungsformen der Erfindung sind anhand der folgenden Figuren näher erläutert. Hierbei handelt es sich lediglich um beispielhafte Ausgestaltungsformen, die keine Einschränkung des Schutzumfangs darstellen.
Dabei zeigen:
Figur 1 eine schematische Darstellung einer Zelle einer Rechargeable Oxide Battery,
Figur 2 eine Explosionsdarstellung eines Stacks von oben betrachtet,
Figur 3 eine Explosionsdarstellung des Stacks aus Figur 2 von unten betrachtet,
Figur 4 einen Stack mit nach aussen offenen Kanälen für das Speichermedium,
Figur 5 einen Stack in einem gasdichten mit Wasserdampf-Wasserstoff-Gemisch gefüllten Reservoir mit thermischer Isolierung und
Figur 6 einen elektrischen Energiespeicher mit vier Stacks in einem Wasserdampf-Wasserstoff-Reservoir mit thermischer Isolierung.

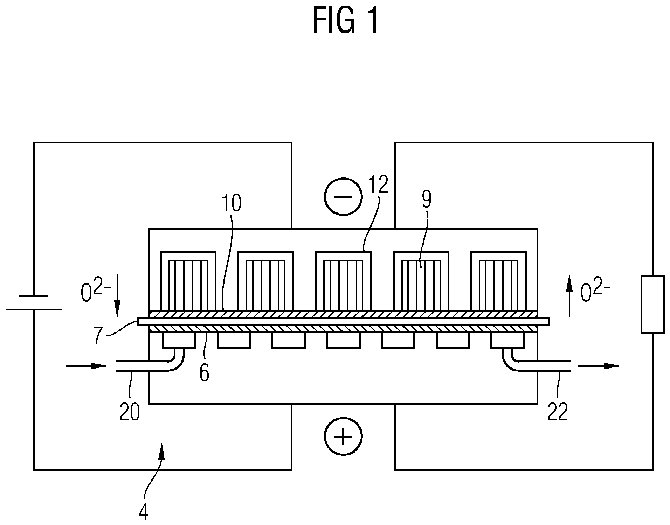

Anhand von Figur 1 soll zunächst schematisch die Wirkungsweise einer Rechargeable Oxide Batterie (ROB) beschrieben werden, insoweit dies für die vorliegende Beschreibung der Erfindung notwendig ist. Ein üblicher Aufbau einer ROB besteht darin, dass an einer positiven Elektrode 6, die auch als Luftelektrode bezeichnet wird, ein Prozessgas, insbesondere Luft, über eine Gaszufuhr 20 eingeblasen wird, wobei aus der Luft Sauerstoff entzogen wird. Der Sauerstoff gelangt in Form von Sauerstoffionen O²⁻ durch einen an der positiven Elektrode anliegenden Feststoffelektrolyten 7, zu einer negativen Elektrode 10., die, wie beschrieben auch als Speicherelektrode bezeichnet wird. Würde nun an der negativen Elektrode 10 also an der Speicherelektrode eine dichte Schicht des aktiven Speichermaterials vorliegen, so würde die Ladekapazität der Batterie schnell erschöpft werden.

Aus diesem Grund ist es zweckmäßig, an der negativen Elektrode 10 als Energiespeichermedium ein Speichermedium 9 aus porösem Material einzusetzen, das ein funktional wirkendes oxidierbares Material als ein aktives Speichermaterial, bevorzugt in Form von Eisen und Eisenoxid enthält.

Über ein, bei Betriebszustand der Batterie gasförmiges Redoxpaar, beispielsweise H₂/H₂O, wird der, in Form von O²⁻ Ionen durch den Festkörperelektrolyten 7 transportierte Sauerstoff von der negativen Elektrode unter Zurücklassung der Elektronen durch Porenkanäle in dem porösen Speichermedium 9, in die Tiefe des aktiven Speichermaterials transportiert. Je nachdem ob ein Entlade- oder Ladevorgang vorliegt, wird das Metall bzw. das Metalloxid (Eisen/Eisenoxid) oxidiert oder reduziert und der hierfür benötigte Sauerstoff durch das gasförmige Redoxpaar H_{2/}H₂O angeliefert oder zum Festkörperelektrolyten 7 zurück transportiert. Dieser durch das gasförmige Redoxpaar getragene Sauerstoff-Transportmechanismus wird als Shuttle-Mechanismus bezeichnet.

Der Vorteil des Eisens als oxidierbares Material, also als aktives Speichermaterial, besteht darin, dass es bei seinem Oxidationsprozess in etwa dieselbe Ruhespannung von etwa 1 V aufweist, wie das Redoxpaar H_{2/}H₂O bei einem Partialdruckverhältnis von 1, andernfalls ergibt sich ein erhöhter Widerstand für den Sauerstofftransport durch die diffundierenden Komponenten dieses Redoxpaares.

Ein Vorteil der ROB besteht darin, dass sie durch Wiederholung ihrer kleinsten Einheit, nämlich der Speicherzelle 4 modular nahezu unbegrenzt erweiterbar ist. Somit ist eine kleine Batterie für den stationären Hausgebrauch ebenso darstellbar wie eine großtechnische Anlage zur Speicherung der Energie eines Kraftwerkes.

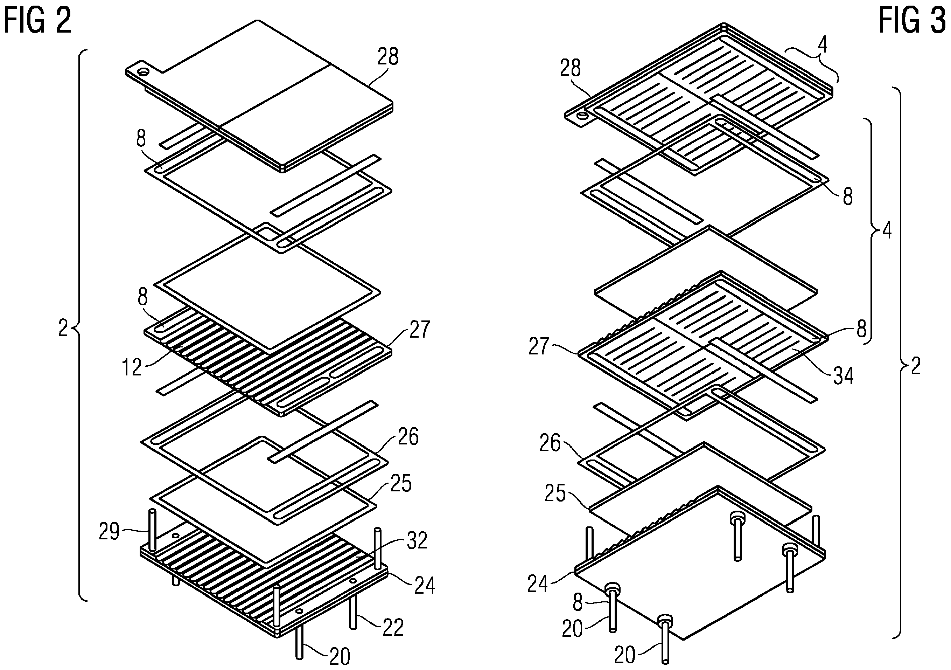

Mehrere der in Figur 1 beschriebenen Speicherzellen 4 sind zu einem sogenannten Stack 2 zusammengefasst. Der Aufbau eines Stacks 2 und die Anordnung der Speicherzellen 4 in dem Stack 2 ist anhand der Explosionsdarstellungen in Figur 2 und Figur 3 veranschaulicht. In Figur 2 ist der Aufbau eines Stacks dargestellt, der von oben betrachtet ist und hierbei in der Reihenfolge von unten nach oben zusammengesetzt wird. Der Stack 2 umfasst zunächst eine Bodenplatte 24, die gegebenenfalls aus mehreren Einzelplatten, die wiederum funktionale Strukturierungen und Vertiefungen beispielsweise zur Luftführung aufweisen, zusammengesetzt ist. Diese Zusammensetzung von Einzelplatten, die hier nicht näher beschrieben ist, zur Bodenplatte 24 erfolgt beispielsweise durch ein Hartlotverfahren.

Die Grundplatte 24 weist eine Luftzufuhr 20 sowie eine Luftabfuhr 22 auf. Wie bereits beschrieben, sind durch die Zusammensetzung von Einzelplatten in der Bodenplatte 24 hier nicht sichtbare Kanäle zur Luftzufuhr integriert. Ferner weist die Bodenplatte 24 Zentrierbolzen 29 auf, durch die nun weitere Komponenten des Stacks 2 zentriert aufgebracht werden können. Als nächste Schicht folgt eine Elektrodenstruktur 25, die insbesondere die bereits beschriebene positive Elektrode 6, den Festkörperelektrolyten 7 sowie die Speicherelektrode 10 umfasst. Hierbei handelt es sich um eine selbsttragende keramische Struktur, auf die die einzelnen funktionalen Bereiche wie die Elektroden bzw. Festkörperelektrolyt in einem Dünnschichtverfahren aufgebracht sind.

Als weitere Schicht folgt eine Dichtung 26, die beispielsweise aus einer hochtemperaturbeständigen Glasfritte besteht, die die einzelnen Platten des Stacks 2 bei den Betriebstemperaturen der Batterie abdichtet. Die nächste folgende Platte ist eine sogenannte Interkonnektorplatte 27, die zwei funktional wirkende Seiten aufweist. An ihrer bezüglich Figur 2 gesehenen unteren Seite 34 befinden sich die hier nicht näher dargestellten Luftzufuhrkanäle die an die positive Elektrode 6 einer Speicherzelle 4 grenzen. Auf ihrer Oberseite (Speicherseite 32) weist die Interkonnektorplatte 27 Kanäle 12 auf, in die das Speichermedium 9 eingebracht ist. Die Oberseite der Interkonnektorplatte 27 in Figur 2 weist dieselbe Struktur auf wie die Oberseite der Grundplatte 24. Auch hier sind die Kanäle 12 zur Einbringung des Speichermediums 9 vorgesehen. Diese Seite mit den Kanälen 12 ist jeweils der Speicherelektrode 10 der Speicherzelle 4 zugewandt.

Exemplarisch ist in Figur 2 eine weitere Ebene der Folge von Elektrodenstruktur 25, Dichtung 26 unter einer Abschlussplatte 28 zum Gesamtaufbau des Stacks 2 dargestellt. Grundsätzlich können selbstverständlich noch eine Reihe weiterer Ebenen dieser Bauteile folgen, so dass ein Stack üblicherweise zwischen 10 und mehr Schichten von Speicherzellen 4 aufweist.

In Figur 3 ist derselbe Stack 2, der in der Figur 2 beschrieben ist, in umgekehrter Blickrichtung dargestellt. In Figur 3 blickt man von unten auf die Grundplatte 24, es folgt wiederum die Elektrodenstruktur 25 und die Dichtung 26. Die Interkonnektorplatte 27 ist nun ebenfalls von unten sichtbar, wobei hierbei der Blick auf die Luftseite 34 gelenkt ist, die der Luftelektrode zugewandt ist (Luftseite 34). In diesem Beispiel sind auf der Interkonnektorplatte vier getrennte Bereiche auf der Luftseite 34 dargestellt, die einer Unterteilung in vier einzelne Speicherzellen 4 pro Stackebene entsprechen (wobei diese Unterteilung in vier Speicherzellen als rein exemplarisch anzusehen ist). Die Speicherzelle 4 setzt sich somit in diesem Beispiel aus einem Viertel der Fläche der jeweiligen Interkonnektorplatte bzw. der Grundplatte 24 bzw. der Deckplatte 28 zusammen. Ferner wird die jeweilige Zelle 4 durch eine Abfolge der jeweiligen Luftseite 34, Dichtung 26, Elektrodenstruktur 25 und wiederum jeweils ein Viertel der Speicherseite 32 der Grundplatte 24 bzw. der Interkonnektorplatte 27 gebildet. Die Luftseite 34 wird hierbei durch eine hier nicht näher dargestellte stackinterne Luftverteilungsvorrichtung 8 (auch Manifold genannt), die mehrere Ebenen des Stacks umfasst, mit dem Prozessgas Luft versorgt.

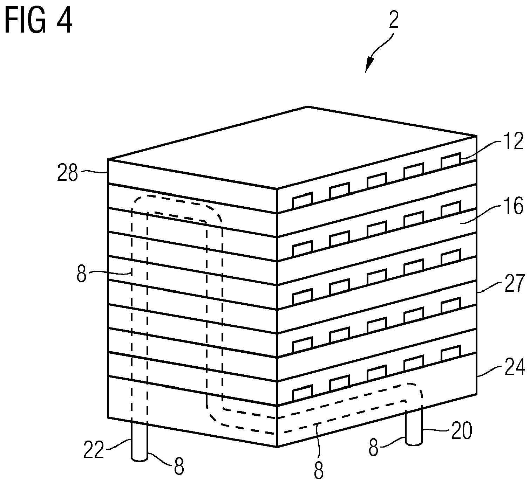

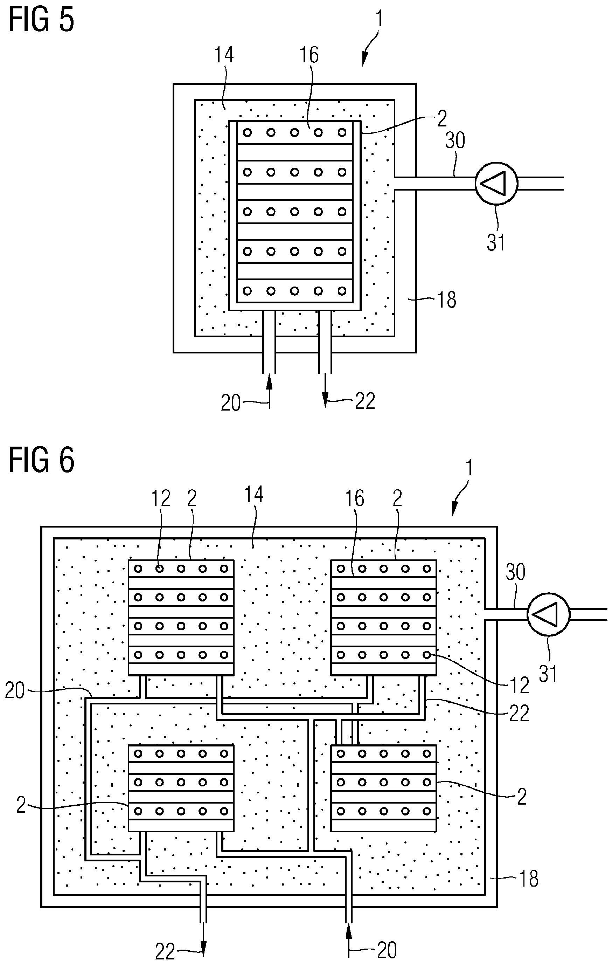

In Figur 4 ist ein Stack 2 gemäß Figur 2 und 3 in zusammengebauter Form dargestellt. Es ist von außen die Luftzufuhr 20 sowie die Luftabfuhr 22 zu erkennen, durch gestrichelte Linien ist die im Inneren angeordnete Luftverteilungsvorrichtung 8 schematisch dargestellt. Die Luftverteilungsvorrichtung 8 umfasst dabei sowohl den Lufteinlass 20, den Luftauslass 22 sowie nicht näher benannte Kanäle in der Grundplatte 24 sowie im seitlichen Bereich des zusammengesetzten Stacks 2. Atmosphärisch getrennt davon sind die Kanäle 12 angeordnet, die sich jeweils auf der Speicherseite 32 der Grundplatte 24 bzw. der Interkonnektorplatte 27 befinden. In den Kanälen 12 ist, wie in Figur 5 näher zu erkennen ist, das Speichermedium 9 eingebracht. In der hier vorliegenden Ausgestaltungsform sind die Kanäle 12 bezüglich einer Stack-Wand 16 offen zugänglich. Der Stack 2 kann somit, wie das in Figur 5 schematisch dargestellt ist, in einen geschlossenen Raum gebracht werden, in dem wiederum eine H₂/H₂O-Atmosphäre herrscht. Dieser geschlossene Raum mit der H₂/H₂O-Atmosphäre wird als Reservoir 14 bezeichnet. Das Reservoir 14 weist dabei bevorzugt einen Überdruck des Reaktionspaares H₂/H₂O von etwa 1-100 hPa auf. Hiermit wird gewährleistet, dass bei einer möglichen Leckage des Reservoirs 14 kein Stickstoff und Sauerstoff von außen in das Reservoir 14 eindringt, sondern dass in diesem Fall eher in unschädlicher Weise H_{2/}H₂O aus dem Reservoir entweichen kann, wobei dieser Verlust durch Stromfluss und eine Wasserdampfzuführung 30 über ein Ventil 31 ausgeglichen werden kann. Es wäre ebenso gut möglich anstatt reinem Wasserdampf ein Wasserstoff-Wasserdampf-Gemisch zuzuführen, oder aber auch reinen Wasserstoff. Die gesamte Anordnung gemäß Figur 5 mit dem Stack 2 und dem Reservoir 14, das durch eine thermische Isolierung 18 umschlossen ist, die auch als sogenannte Hotbox bezeichnet wird, wird als elektrischer Energiespeicher 1 bezeichnet.

Hierbei sind auch komplexere elektrische Energiespeicher 1 zweckmäßig, in denen mehrere Stacks 2 angeordnet sind (Figur 6). Hierbei kann eine zentrale Luftzufuhr 20 und eine zentrale Luftabfuhr 22 vorgesehen sein, wobei hierdurch die einzelnen Stacks 2 durch eine entsprechende Leitung 20 mit dem Prozessgas Luft versorgt werden. In der Hotbox 18 herrscht nahezu die Betriebstemperatur des elektrischen Energiespeichers vor, die üblicherweise zwischen 600°C und 800°C liegt. Grundsätzlich können in der Hotbox 18 auch noch weitere Anordnungen zur Wärmespeicherung beispielsweise ein Latentwärmespeicher, der hier nicht dargestellt ist, angeordnet sein.

## Patentansprüche

1. Elektrischer Energiespeicher mit mehr als einem Stack (2) mit jeweils mindestens einer Speicherzelle (4), die wiederum eine Luftelektrode (6), die mit einer Luftzufuhrvorrichtung (8) in Verbindung steht und eine Speicherelektrode (10) umfasst wobei die Speicherelektrode (10) an Kanäle (12) angrenzt, die ein Speichermedium (9) und Wasserdampf enthalten, wobei ein Reservoir (14) an Wasserdampf vorgesehen ist, dass mit den Kanälen (12) in direkter Verbindung steht und das Wasserdampf-Reservoir (14) mehrere Stacks (2) umschließt.

2. Elektrischer Energiespeicher nach Anspruch 1, **dadurch gekennzeichnet, dass** die Kanäle (12) zu einer Stack-Wand (16) hin offen zugänglich sind.

3. Elektrischer Energiespeicher nach Anspruch 2, **dadurch gekennzeichnet, dass** das Wasserdampf-Reservoir (14) die Stack-Wand (16) umgibt an der die Kanäle (12) offen zugänglich sind.

4. Elektrischer Energiespeicher nach einem der vorhergehenden Ansprüche, **dadurch gekennzeichnet, dass** das Wasserdampf-Reservoir (14) den gesamten Stack (2) umgibt.

5. Elektrischer Energiespeicher nach einem der vorhergehenden Ansprüche, **dadurch gekennzeichnet, dass** das Wasserdampf-Reservoir (14) nach außen thermisch isoliert ist.

6. Elektrischer Energiespeicher nach einem der vorhergehenden Ansprüche, **dadurch gekennzeichnet, dass** im Wasserdampf-Reservoir (14) ein Überdruck vorherrscht.

## Claims

1. Electrical energy store with more than one stack (2), each with at least one storage cell (4) which comprises, in turn, an air electrode (6), which is connected to an air supply device (8), and a storage electrode (10), the storage electrode (10) being adjacent to ducts (12) which contain a storage medium (9) and water vapor, wherein a reservoir (14) of water vapor is provided which is connected directly to the ducts (12), and the water vapor reservoir (14) surrounds a plurality of stacks (2).

2. Electrical energy store according to Claim 1, **characterized in that** the ducts (12) are accessible by being open toward a stack wall (16).

3. Electrical energy store according to Claim 2, **characterized in that** the water vapor reservoir (14) surrounds the stack wall (16) at which the ducts (12) are accessible by being open.

4. Electrical energy store according to one of the preceding claims, **characterized in that** the water vapor reservoir (14) surrounds the entire stack (2).

5. Electrical energy store according to one of the preceding claims, **characterized in that** the water vapor reservoir (14) is thermally insulated outwardly.

6. Electrical energy store according to one of the preceding claims, **characterized in that** an overpressure prevails in the water vapor reservoir (14).

## Revendications

1. Accumulateur d'énergie électrique ayant plus d'un empilement (2) ayant chacun au moins une cellule (4) d'accumulateur, qui comprend à son tour une électrode (6) d'air en liaison avec un dispositif (8) d'apport d'air et une électrode (10) d'accumulateur, l'électrode (10) d'accumulateur étant voisine de canaux (12) qui contiennent un fluide (9) d'accumulateur et de la vapeur d'eau, dans lequel il est prévu un réservoir (14) de vapeur d'eau, qui est en liaison directe avec les canaux (12) et le réservoir (14) de vapeur d'eau entoure plusieurs empilements.

2. Accumulateur d'énergie électrique suivant la revendication 1, **caractérisé en ce que** les canaux (12) sont accessibles en étant ouverts vers une paroi (16) de l'empilement.

3. Accumulateur d'énergie électrique suivant la revendication 2, **caractérisé en ce que** le réservoir (14) de vapeur d'eau entoure la paroi (16) de l'empilement sur laquelle les canaux (12) sont accessibles en étant ouverts.

4. Accumulateur d'énergie électrique suivant l'une des revendications précédentes, **caractérisé en ce que** le réservoir (14) de vapeur d'eau entoure tout l'empilement (2).

5. Accumulateur d'énergie électrique suivant l'une des revendications précédentes, **caractérisé en ce que** le réservoir (14) de vapeur d'eau est isolé thermiquement vers l'extérieur.

6. Accumulateur d'énergie électrique suivant l'une des revendications précédentes, **caractérisé en ce qu'**une surpression règne dans le réservoir (14) de vapeur d'eau.
